# EUROPÄISCHE PATENTANMELDUNG

(11) **EP 1 477 433 A1**
(43) Veröffentlichungstag der Anmeldung: **17.11.2004**
(21) Anmeldenummer: 04090183.7
(22) Anmeldetag: 06.05.2004
(51) Int. Cl.: B65G 17/00, B65G 47/52

(54) **Fördersystem für Behälter, insbesondere eine Flughafen-Gepäckförderanlage, sowie eine vertikal konvex gekrümmte Steigung für ein Fördersystem**

(30) Priorität: 15.05.2003 DE 10321915
(71) Anmelder: Siemens Aktiengesellschaft, 80333 München (DE)
(72) Erfinder: Brixius, Wolfgang, 91077 Neunkirchen A. Br. (DE); Gräfer, Dominik, 44265 Dortmund-Wellinghofen (DE); Hoene, Albrecht, Dr., 93138 Lappersdorf (DE)

(57) **Zusammenfassung**

Die Erfindung betrifft ein Fördersystem für Behälter, insbesondere eine Flughafen-Gepäckförderanlage, mit einer Förderbahn, die zumindest eine vertikal konvex gekrümmte Steigung (2) aufweist, und mit Antriebsmitteln (9), welche die Behälter (31) im konvexen Bereich bewegen und auf denen die Behälter (31) mit ihrer Bodenunterseite (32) aufliegen. Um jeweils eine stabile Lage der Behälter beim Durchlaufen der konvexen Steigung sicherzustellen, wird vorgeschlagen, dass die Behälter (31) auf ihrer Bodenunterseite (32) eine in Bewegungsrichtung der Behälter (31) verlaufende schlitzförmige Ausnehmung (33) aufweisen, wobei die Antriebsmittel (9) beim Behälterdurchlauf des konvexen Bereichs von unten in die Ausnehmung (33) eingreifen und die Behälter (31) nur mit ihrer in Bewegungsrichtung gesehen vorderen und hinteren Kante (34) der Ausnehmung (33) auf dem zugehörigen Antriebsmittel (9) aufliegen.

## Beschreibung

Die Erfindung betrifft eine Steigung für ein Fördersystem für Behälter, insbesondere eine Flughafen-Gepäckförderanlage, gemäß dem Oberbegriff des Anspruchs 1.

Fördersysteme für Behälter mit Steigungen zur Überbrückung von vertikalen Höhenunterschieden bei Flughafen-Gepäckförderanlagen sind bekannt. Die Steigungen können linear und vertikal konvex gekrümmt verlaufen. Konvex gekrümmt bedeutet, dass dieser Teil der Steigung nach außen zur Behälterunterseite weist. Zum Transport der Behälter über die Steigung werden als Antriebsmittel häufig Gurte und Bänder verwendet, auf denen der Behälter aufliegt und mittels derer der Behälter transportiert wird.

Bei alternativen bekannten Fördersystemen wird die vertikal konvexe Steigung mittels aneinandergereihter gerader Förderelemente nachgebildet.

Der Nachteil der Steigungen bekannter Fördersysteme besteht in einem unkontrollierten Fördern der Behälter, da dieser sich beim Durchlaufen einer konvexen Steigung häufig in einer instabilen Lage befindet.

Weiter ist aus der EP 802 129 A2 eine Förderbahn für Behälter bekannt, bei der die Behälter entlang der Förderbahn bewegt werden. Zum Bewegen der Behälter werden diese mit Fördergurten angetrieben, die als endlos umlaufende Flachgurte ausgebildet und über Umlenkräder geführt sind. Eine Behälterseite liegt dabei jeweils kraftschlüssig auf einem Fördergut auf; die andere Behälterseite ist über frei drehbare Tragrollen abgestützt. Zur Führung der Behälter dient eine Führungsschiene, die jeweils mit einem an der Unterseite der Behälter vorgesehenen stiftförmigen Führungselement zusammenwirkt. Das Führungselement ist in der Führungsschiene geführt und verhindert zusätzlich ein Abheben der Behälter von der Förderbahn. Die Führung erfolgt mittels zweier in Transportrichtung verlaufender Längsseiten der Führungsschiene, wobei auch die Querbewegung der Behälter verhindert wird.

Ferner ist aus der US 3,977,513 ein Fördersystem bekannt, das Zeitungsstapel entlang einer endlosen Förderbahn transportiert. Dabei liegen die Zeitungsstapel auf Wagen, die miteinander verbunden einen endlosen Zug bilden. Der Wagenzug kann dabei auch vertikale Steigungen durchlaufen. Die Zeitungsstapel werden mittels Verteiler zur entsprechenden Stelle einer Ladezone transportiert. Dazu sind an den Verteilern Rutschen angeordnet, an denen die Zeitungsstapel ausgekoppelt werden können. Die Behälter rollen mit ihren Laufrädern auf. einer Laufschiene ab, welche mittig angeordnet eine Führungsschiene aufweist. In die Führungsschiene greift ein an der Unterseite der Behälter befindlicher vertikaler Stift ein, an dessen freiem Ende eine frei drehbare Führungsrolle angeordnet ist. Diese stützt sich zur seitlichen Führung an den beiden einander gegenüberliegenden Längsseiten der Führungsschiene ab. Oben an der Führungsschiene angeordnete schienenförmige Anschlagelemente verhindern ein Abheben der Behälter.

Die Aufgabe der Erfindung besteht darin, eine stabile Lage der Behälter beim Durchlaufen der konvexen Steigung jeweils sicherzustellen.

Die Lösung dieser Aufgabe ist durch die im Anspruch 1 angegebenen Merkmale gegeben. Durch die kennzeichnenden Merkmale der Unteransprüche ist das Fördersystem in vorteilhafter Weise weiter ausgestaltet.

Die Lösung sieht vor, dass die Behälter auf ihrer Bodenunterseite eine in Bewegungsrichtung der Behälter verlaufende schlitzförmige Ausnehmung aufweisen,
wobei die Antriebsmittel beim Behälterdurchlauf des konvexen Bereichs von unten in die Ausnehmung eingreifen und die Behälter nur mit ihrer in Bewegungsrichtung gesehen vorderen und hinteren Kante der Ausnehmung auf dem zugehörigen Antriebsmittel aufliegen. Da der Behälter nur über zwei Kanten auf den Antriebsmitteln aufliegt, wird in allen Situationen eine stabile Lage sichergestellt. Diesem Zweck dient auch eine hinreichende Tiefe der Ausnehmung, die so bemessen ist, dass die Antriebsmittel beim Behälterdurchlauf zwar in die Ausnehmung hineinragen, die Bodenfläche der Ausnehmung aber nicht berühren.

Bei einer einfachen Ausführung sind die Antriebsmittel als Antriebsband ausgebildet.

Um einen konvexen Verlaufs des Antriebsbandes mit geringem Aufwand sicherzustellen, wird dieses über ein Führungselement geführt, das einen zum konvexen Bereich korrespondierenden Verlauf aufweist.

Zur Verbesserung der seitlichen Führung des Behälters wird vorgeschlagen, dass das Führungselement mit den beiden Seitenflächen der Ausnehmung zur Führung des Behälters zusammenwirkt.

Bei einer einfachen Ausführung ist das Führungselement als Platte ausgebildet, deren Dicke dem Abstand der beiden Seitenflächen entspricht, so dass quasi ein seitlicher Formschluss mit der Ausnehmung entsteht.

Zur weiteren Verbesserung der Lagestabilität weisen die Behälter jeweils zwei Ausnehmungen mit rechteckigem Querschnitt auf, deren Längsseiten parallel verlaufen und in welche zwei entsprechend parallel zueinander angeordnete Führungselemente eingreifen.

Die Erfindung wird nachfolgend anhand einer Zeichnung näher beschrieben. Es zeigen:
- Fig. 1: einen Abschnitt eines Fördersystems mit einer vertikal konvex gekrümmten Steigung,
- Fig. 2: den mittleren Bereich des Abschnitts gemäß Fig. 1,
- Fig. 3: den Abschnitt gemäß Fig. 1 von der Seite gesehen und
- Fig. 4: einen für den Durchlauf der Steigung geeigneten Behälter mit Blick auf dessen Unterseite.

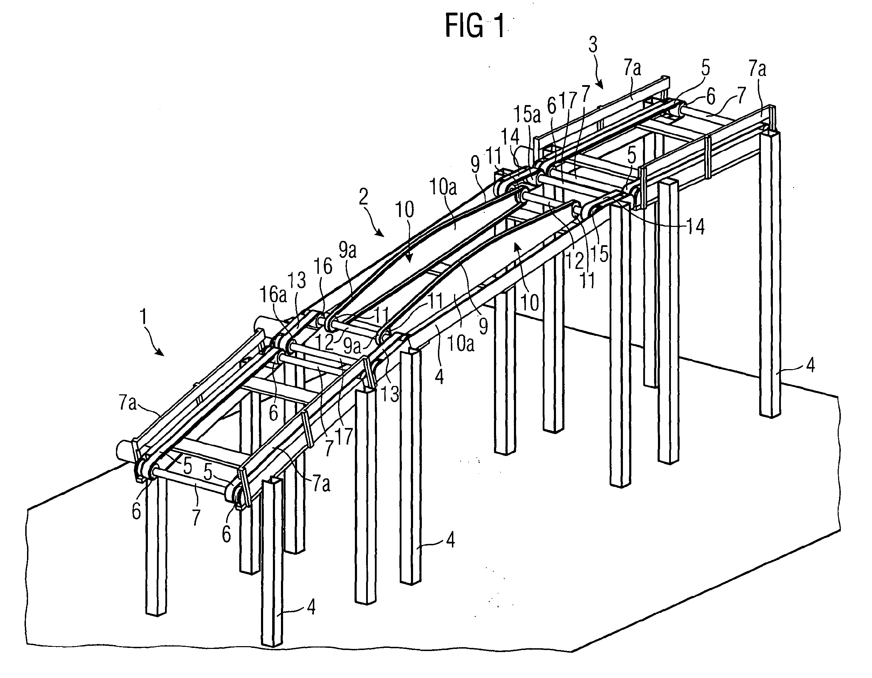

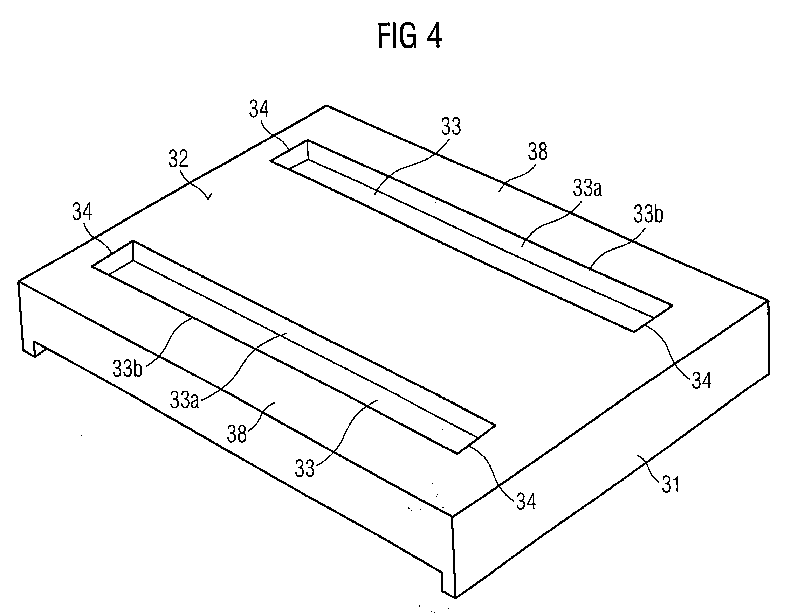

In Fig. 4 ist ein für den Durchlauf der Steigung 2 (s. Fig. 1) geeigneter Behälter mit Blick auf dessen Bodenunterseite 32 zu sehen, die hierbei eben ausgebildet ist. Sie weist zwei Ausnehmungen 33 mit rechteckigem Querschnitt auf, deren Längsseiten 33b parallel zueinander verlaufen. Seitlich werden die beiden Ausnehmungen 33 durch parallele Seitenflächen 33a begrenzt. In Bewegungsrichtung der Behälter 31 weisen die Ausnehmungen 33 vorn und hinten jeweils eine Stirnkante 34 auf.

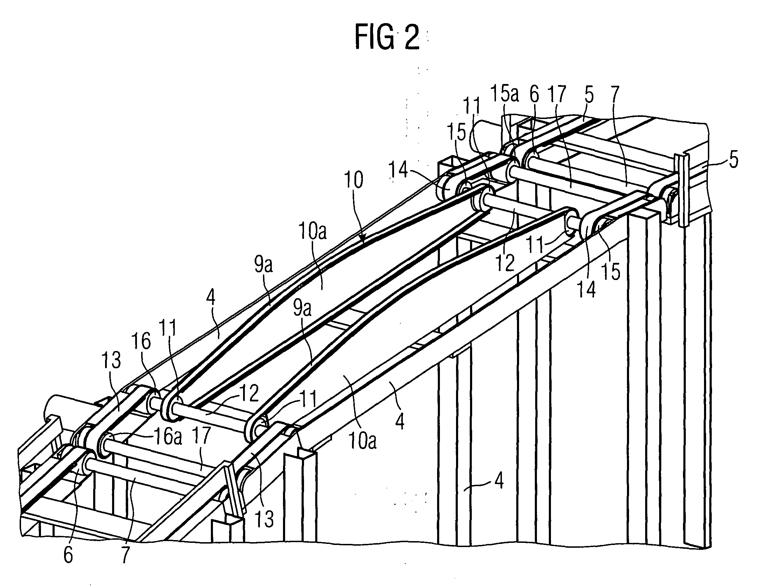

Fig. 1 zeigt einen Abschnitt eines Fördersystems für Behälter 31. Der dargestellte Abschnitt weist in Förderrichtung gesehen eine lineare Steigung 1, dieser nachgeschaltet eine vertikal konvex gekrümmte Steigung 2 und daran anschließend einen horizontalen Bereich 3 auf. In Fig. 2 ist die vertikal konvex gekrümmte Steigung 2 vergrößert gezeigt.

Die lineare Steigung 1 besteht aus einer Tragkonstruktion 4, die sich auf dem Boden abstützt. Zum Antrieb der Behälter 31 sind zwei parallel angeordnete Förderbänder 5 vorgesehen, die - bezogen auf Fig. 1 - von links unten nach rechts oben verlaufen. Bei den Förderbändern 5 handelt es sich um endlos umlaufende Förderbänder, die über Umlenkrollen 6 geführt sind. Die Umlenkrollen 6 sitzen wiederum paarweise auf zwei drehgelagerten Achsen 7. Auf diese Weise wird eine synchrone Bewegung der Förderbänder 5 sichergestellt. Die Behälter 31 liegen beim Durchlaufen der linearen Steigung 1 mit ihren flachen Unterseiten 38 (Fig. 4) auf den Förderbändern 5 auf. Zur seitlichen Führung sind beidseitig der Förderbänder 5 Seitenplatten 7a vorgesehen.

Im mittleren Bereich des in Fig. 1 dargestellten Abschnittes befindet sich (ebenfalls auf einer Tragkonstruktion 4) die konvexe Steigung z. Zur Bewegung der Behälter 31 sind als Antriebsmittel 9 endlos umlaufende Antriebsbänder 9a vorgesehen, die um ein als Platte 10a ausgebildetes Führungselement 10 herum verlaufen. Die Platte 10a ist auf ihrer in Fig. 1 nach oben weisenden Seite vertikal konvex gekrümmt, mit einem linearen Ein- und Auslaufbereich. Die Antriebsbänder 9a sind wiederum über Rollen 11 geführt, die ebenfalls paarweise auf jeweils einer gemeinsamen Drehachse 12 sitzen.

Den Führungselementen 10 sind jeweils zwei gerade parallel zueinander ausgerichtete Antriebsbänder 13, 14 vor- bzw. nachgeschaltet. Deren Umlenkrollen 15, 15a, 16, 16a sitzen paarweise auf Drehachsen 12, 17, wobei die Umlenkrollen 15, 16 mit den Rollen 11 jeweils auf der gemeinsamen Achse 12 sitzen. Dadurch wird ein synchroner Umlauf der Bänder 9, 13, 14 sichergestellt.

Der horizontale Bereich 3 ist ähnlich der linearen Steigung 1 aufgebaut; er umfasst zwei parallele Förderbänder 5, die außenseitig ebenfalls durch Seitenplatten 7a begrenzt sind. Für den Umlauf der endlosen Bänder 5 sind die Paare von Umlenkrollen 6 vorgesehen, die auf den drehgelagerten Achsen 7 sitzen.

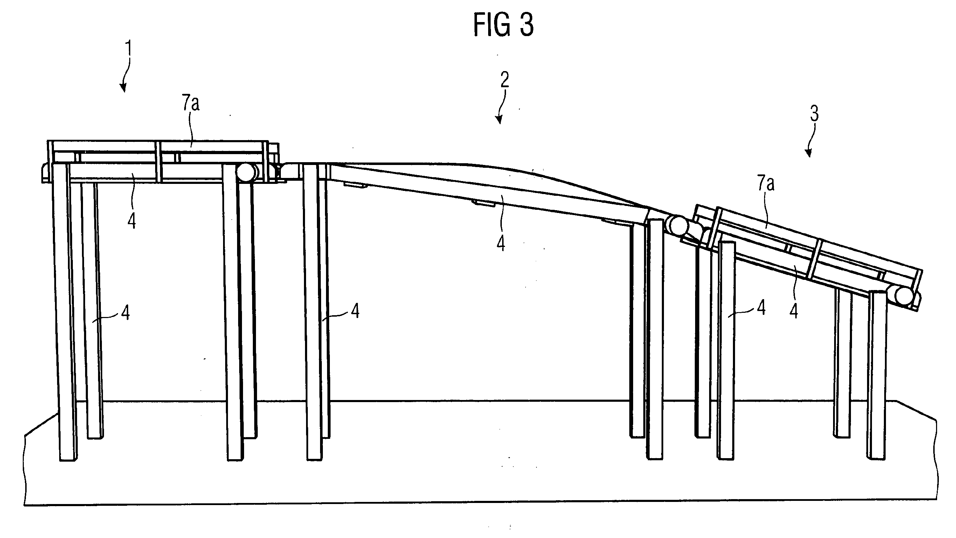

Fig. 3 zeigt den Abschnitt des Fördersystems gemäß Fig. 1 noch einmal von der Seite gesehen, wobei die lineare Steigung 1, die konvex gekrümmte Steigung 2 und der horizontale Bereich 3 deutlicher erkennbar sind.

Beim Durchlauf der Behälter 31 durch die konvexe Steigung 2 greifen die Antriebsmittel 9 einschließlich der Führungselemente 10, um die sie umlaufen, von unten in die Ausnehmung 33 der Behälter 31 ein. Die Behälter 31 liegen im konvexen Bereich der Steigung 2 nur mit ihren Kanten 34 vorn und hinten auf dem zugehörigen Antriebsmittel 9 auf, hier dem Antriebsband 9a. Weiter wirkt das Führungselement 10 jeweils mit den beiden Seitenflächen 33a der Ausnehmung 33 zusammen, wobei die Behälter 31 seitlich geführt werden. Bei Ausbildung des Führungselements 10 als Platte 10a muss deren Dicke dem Abstand der beiden Seitenflächen 33a entsprechen. Wie Fig. 1 erkennen lässt, greifen jeweils beide Führungselemente 10 in die entsprechende Ausnehmung 33 ein, was eine zuverlässige Führung sicherstellt.

### Bezugszeichenliste

- 1: lineare Steigung
- 2: konvexe Steigung
- 3: horizontaler Bereich
- 4: Tragkonstruktion
- 5: Förderband
- 6: Umlenkrolle
- 7: Achse
- 7a: Seitenplatte
- 9: Antriebsmittel
- 9a: Antriebsband
- 10: Führungselement
- 10a: Platte
- 11: Rolle
- 12: Drehachse
- 13: Antriebsband
- 14: Antriebsband
- 15: Umlenkrolle
- 15a: Umlenkrolle
- 16: Umlenkrolle
- 16a: Umlenkrolle
- 17: Drehachse
- 31: Behälter
- 32: Bodenunterseite
- 33: Ausnehmung
- 33a: Seitenfläche
- 33b: Längsseite
- 34: Stirnkante
- 38: Unterseite

## Patentansprüche

1. Steigung (2) eines Fördersystems für Behälter (31), insbesondere eine Flughafen-Gepäckförderanlage,
die zumindest in einem Bereich vertikal konvex gekrümmt ist, mit Antriebsmitteln (9), welche die Behälter (31) im konvexen Bereich bewegen und auf denen die Behälter (31) mit ihrer Bodenunterseite (32) aufliegen,
**dadurch gekennzeichnet,**
**dass** die Behälter (31) auf ihrer Bodenunterseite (32) eine in Bewegungsrichtung der Behälter (31) verlaufende schlitzförmige Ausnehmung (33) aufweisen,
wobei die Antriebsmittel (9) beim Behälterdurchlauf des konvexen Bereichs von unten in die Ausnehmung (33) eingreifen und die Behälter (31) nur mit ihrer in Bewegungsrichtung gesehen vorderen und hinteren Kante (34) der Ausnehmung (33) auf dem zugehörigen Antriebsmittel (9) aufliegen.

2. Fördersystem nach Anspruch 1,
**dadurch gekennzeichnet,**
**dass** die Antriebsmittel (9) als Antriebsband (9a) ausgebildet sind.

3. Fördersystem nach Anspruch 2,
**dadurch gekennzeichnet,**
**dass** das Antriebsband (9a) über ein Führungselement (10) geführt ist, das einen zum konvexen Bereich korrespondierenden Verlauf aufweist.

4. Fördersystem nach Anspruch 3,
**dadurch gekennzeichnet,**
**dass** das Führungselement (10) mit den beiden Seitenflächen (33a) der Ausnehmung (33) zur Führung des Behälters (31) zusammenwirkt.

5. Fördersystem nach Anspruch 3 oder 4,
**dadurch gekennzeichnet,**
**dass** das Führungselement (10) als Platte (10a) ausgebildet ist, deren Dicke dem Abstand der beiden Seitenflächen (33a) entspricht.

6. Fördersystem nach einem der Ansprüche 1 - 5,
**dadurch gekennzeichnet,**
**dass** die Behälter (31) jeweils zwei Ausnehmungen (33) mit rechteckigem Querschnitt aufweisen, deren Längsseiten (33b) parallel verlaufen und in welche zwei entsprechend parallel zueinander angeordnete Führungselemente (10) eingreifen.

7. Fördersystem nach einem der Ansprüche 3 - 6,
**dadurch gekennzeichnet,**
**dass** den Führungselementen (10) jeweils zwei gerade Antriebsbänder (13, 14) vor- und nachgeschaltet sind, deren Umlenkrollen (15, 16) jeweils auf einer gemeinsamen Achse (12) mit den Umlenkrollen (11) der um die Führungselemente (10) umlaufenden Bänder (9a) sitzen.
